Europäisches Patentamt

European Patent Office

Office européen des brevets

(19)

(11) Publication number : **0 330 390 B1**

# EUROPEAN PATENT SPECIFICATION

(12)

(45) Date of publication of patent specification :
27.12.91 Bulletin 91/52

(51) Int. Cl.⁵ : **B05C 5/04**, B05C 9/14,
B29B 13/02

(21) Application number : 89301594.1

(22) Date of filing : 20.02.89

(54) **Apparatus for melting and dispensing hot-melt materials.**

(30) Priority : 24.02.88 US 159851

(43) Date of publication of application :
30.08.89 Bulletin 89/35

(45) Publication of the grant of the patent :
27.12.91 Bulletin 91/52

(84) Designated Contracting States :
DE FR GB

(56) References cited :
DE-B- 2 610 415
DE-C- 2 925 088
US-A- 3 982 669
US-A- 4 073 409

(73) Proprietor : BOSTIK INC.
The Corporation Trust Company Corporate
Trust Center 1209 Orange Street
Wilmington Delaware 19801 (US)

(72) Inventor : Epp, Edwin Hugo
324 Cornell Street
Roslindale Massachusetts 02131 (US)
Inventor : Dupray, Joseph Wilbur, Jr.
16 Maple Avenue
Ipswich Massachusetts 02938 (US)

(74) Representative : Harrison, Gordon Donald et al
FORRESTER & BOEHMERT
Widenmayerstrasse 4/I
W-8000 München 22 (DE)

## Description

The invention relates to an improved apparatus for melting and dispensing hot-melt materials such as adhesives and sealants.

Apparatus for melting and dispensing hot-melt adhesives and sealants generally comprise a heated platen which fits inside the drum or container of hot-melt material to be dispensed. The heated platen is pressed against the surface of the material contained in the drum, resulting in melting of the material. The melted material is forced through an orifice in the heated platen, pumped and dispensed where needed. Melters of the type described above are generally known. For example, models 5510 and 5520 from Nordson Corp. and Models DP200 and DG200 from Meltex, Inc. are melters of this type.

One problem with the apparatus described above is that the heated platen includes an 'O' ring seal which is sized to closely contact the inside wall of the drum and prevent leakage of molten adhesive as the platen is pressed downwardly into the adhesive. To ensure a close fit and to prevent damage to the expensive 'O' ring seal, care must be taken to position the drum properly. In order to do so it has been found to be necessary to leave from about 10 cm to about 20 cm of headspace in the drum. Otherwise, it would be difficult to position the fully loaded drum exactly central to the platen which does not have the same diameter as that of the drum. In addition, if a full drum were supplied without the headspace, as the heated platen would melt its way into the adhesive, the molten adhesive would fill the annular cavity between the outside of the platen and the inside of the drum. This molten material would be forced up and over the lip of the barrel until the 'O' ring seal came into contact with the rim of the container and sealed it up.

With such apparatus, a drum cannot be completely filled because the headspace of about 10.25 cm to about 20.5 cm (about four to about eight inches) must be left to accommodate the heated platen. The practice of only partially filling drums is wasteful, causing more drums to be filled and shipped as well as more frequent drum changes during operation of the melter dispenser.

With the advent of moisture curable compounds, the practice of partially filling drums presents even greater problems. Drums are normally filled by freshly processed materials which typically are warm or hot. As these materials cool they contract causing a vacuum which pulls in outside air. Because this outside air contains moisture, it can start the curing reaction which will result in surface skinning. Depending on the material, such skins can be very difficult to remove as well as being a waste of material.

U.S. 4073409 describes an apparatus substantially in accordance with the pre-characterising portion of Claim 1 hereinafter. It relates to a hot melt material dispenser having a container for the material which is open at a top thereof to receive a platen which can be heated to melt the material locally and which can be lowered into the container. The molten material is pumped from the container by pump means via an orifice in the platen.

It is an object of the present invention to provide an improved melting and dispensing apparatus for use with hot-melt materials which can accommodate completely filled drums.

According to the present invention, apparatus for melting and dispensing a hot-melt material comprising a cylindrical container or drum for holding hot-melt type material to be melted and dispensed in a molten liquid state, said container having one closed end and one open end, means for supporting said container in an upright position wit said open end facing upward, a cylindrical platen having an 'O' ring seal on its periphery and having an orifice through which molten material is pumped, said platen being positioned tofit into the open end of said container and sized so that the 'O' ring seal slideably engages the inside wall of said container, means for heating said platen to melt said material, pumping means for pumping molten material through said orifice, and means for pressing said heated platen in a downward motion into said material and withdrawing said platen when the container has been emptied ; is characterised in that a disengageable annular drum extender flange is provided upon the open end of said container, said flange having an inside diameter about the same as that of said container and having a height sufficient to engage said 'O'ring seal of said heated platen, and lip means to co-operate with the open end of said container, together with clamping means for securing said annular flange to said container. The drum extender is adapted to allow the 'O' ring seal to enter and withdraw from the drum without damage to the expensive 'O' ring seal.

Preferred embodiments of the present invention will now be described by way of example with reference to the accompanying drawings in which :

Figure 1 depicts a melting and dispensing apparatus according to the present invention operating upon a drum which has one embodiment of a drum extender in position, with a portion of the drum and drum extender broken away to show the adhesive material in the drum ;

Figure 2 depicts one embodiment of a drum extender with a portion thereof broken away, mounted on the top of an open head drum ;

Figure 3 is a top view of one embodiment of a drum extender according to the present invention ;

Figure 4 is a side view of one embodiment of a drum extender according to the present invention ;

Figure 5 is a sectional view of one embodiment of a drum extender according to the present invention taken along line 5-5 of Figure 3 ;

Figure 6 is a sectional view of another embodiment of the drum extender utilized for open head drums, and a side view of one embodiment of a clamping device for use with open headed drums;

Figure 7 depicts a front view of the embodiment of the drum extender and clamping device of Figure 6 ;

Figure 8 is a sectional view of another embodiment of the drum extender ; and

Figure 9 depicts a front view of the embodiment of the drum extender and clamping device of Figure 8.

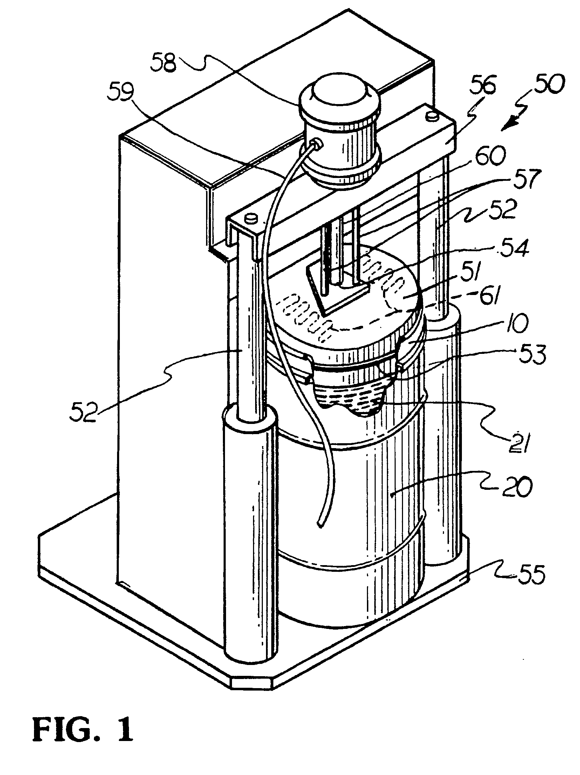

Referring to Figure 1, melting and dispensing apparatus 50 includes a base 55 upon which drum 20 is positioned in an upright manner with the open end of the drum pointing up. Drum 20 contains a material such as a hot-melt adhesive which can be melted in and dispensed from the apparatus. Heated platen 51 is mounted on a cross bar 56 by supports 57. Cross bar 56 is connected to pistons 52 which move heated platen 51 in a downward direction into drum 20 of material as the material is being melted and dispensed and withdraws heated platen 51 when the drum has been emptied. Pistons 52 can be operated by hydraulic or pneumatic action.

Heated plate 51 is cylindrically shaped and includes an 'O' ring seal 53 on its side. The 'O' ring seal closely contacts the inside wall of the drum to prevent adhesive material from seeping around up, and over heated platen 51 as the platen is pressed into the material contained in the drum. In the case of moisture curing compounds, 'O'ring seal 53 also prevents the entry of moisture which would prematurely begin the curing process. Heated platen 51 also contains an office 54 through which molten material is withdrawn from the drum. Orifice 54 is connected to pipe 60 which, in turn, is connected to pump 58 located on cross bar 56. Pump 58 pumps the molten adhesive material through line 59 to wherever it is ultimately dispensed. Heated platen 51 may be heated by electrical resistance wires 61 embedded therein, by steam or heat transfer liquid.

Melting and dispensing apparatus 50 is typically operated by positioning a drum 20 of a hot-melt adhesive or sealant material directly under heated platen 51 and lowering heated platen 51 into the drum until the heated surface contacts the surface of the material 21 to be melted and dispensed. As the heat from heated platen 51 melts the material 21, the molten material is pumped out through orifice 54 and pipe 60. Pistons 52 press heated platen 51 in a downward direction into the material 21. It has previously been necessary to leave a headspace in the drum so that heated platen 51 can be properly aligned with the drum to prevent damage to 'O' ring seal 53 and to prevent spillover of adhesive. Such headspace can be eliminated, however, by utilizing annular flange drum extender 10.

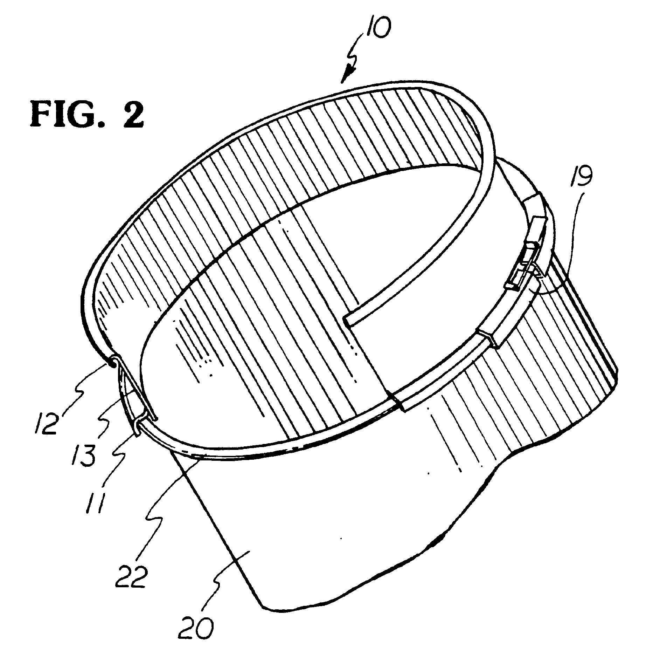

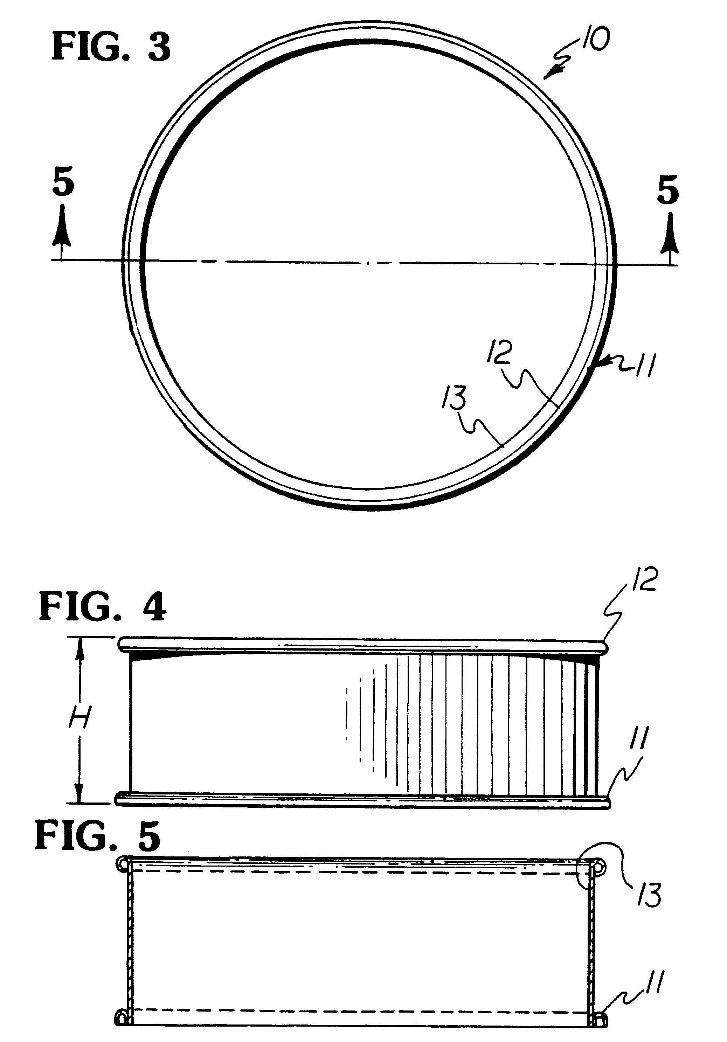

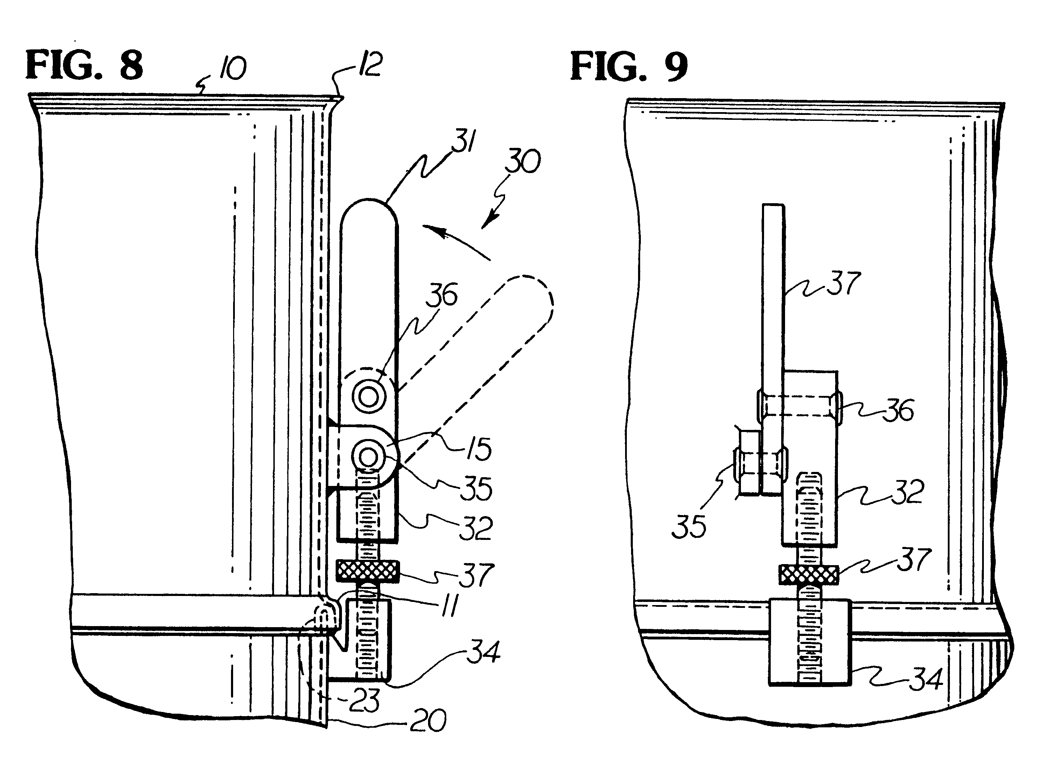

Drum extender 10 comprises an annular flange 13 having an inside diameter about the same as that of drum 20. Drum extenders with different diameters may be provided to accommodate different sized drums and different sized melting and dispensing apparatus. Also, drum extenders with slightly different configurations may be utilized for both open and closed head drums. The drum extender 10 has a height H which is sufficient to engage to 'O' ring seal of the heated platen with which it will be used. Different positions of the 'O' ring seal on the various types of heated platens will necessitate different heights H of the drum extender to ensure that the drum extender properly engages the 'O' ring seal. The drum extender includes lip means 11 to cooperate with the top of a drum. Figures 2-5 depict and inverted U-shaped lip 11 which may be utilized to mount the drum extender upon the roll 22 typically found on open drums. For such use, lip means 11 must be sized to accomodate a standart drum cover gasket 14 to prevent leakage. Figure 8 depicts a slightly different configuration which may be utilized for drums which do not have the roll 22 and gasket 14 to support the drum cover. It is important that lip means 11 do not damage 'O' ring seal 53 as it enters and as it is withdrawn from the drum. In this regard, sharp edges should be eliminated in favour of rolled edges. Preferred are rolled edges slanted slightly away from the platen.

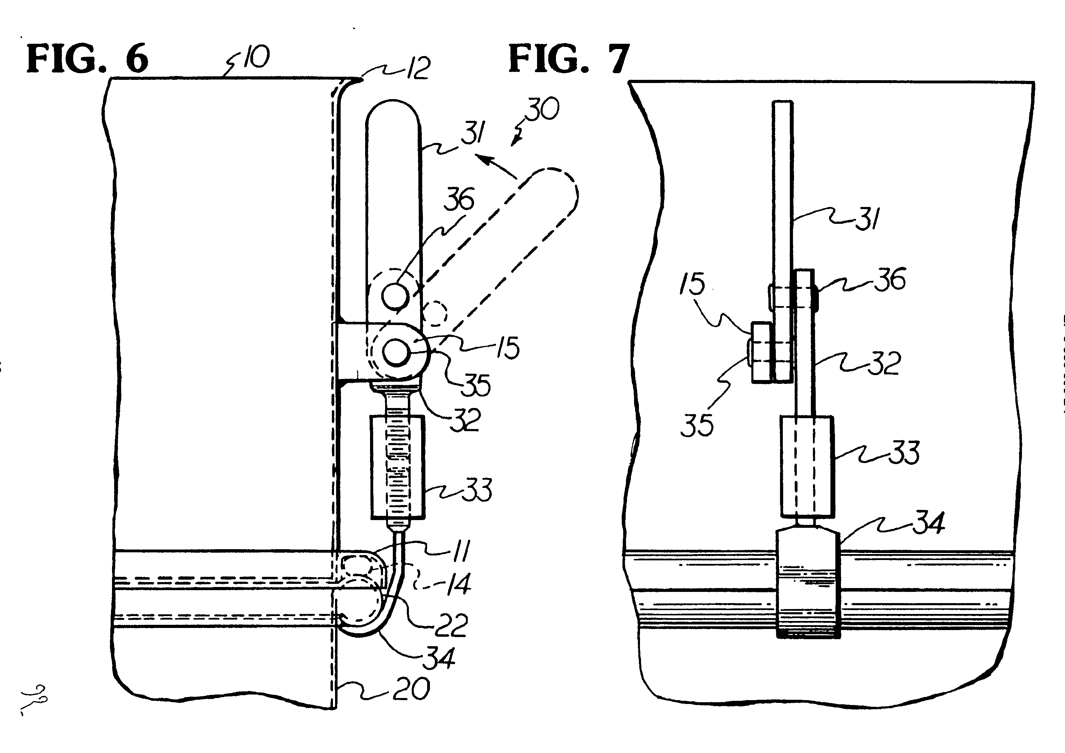

Roll 12 is included on the end of the drum extender opposite that of means 11. Roll 12 is the type typically found in open drums and is provided to impart strength to the drum extender. Other equivalent configurations, such as depicted in Figure 6, can also be employed as long as they exhibit the requisite stiffness and provide a smooth lead for the flexible 'O' ring seal to enter and withdraw without damage.

The drum extender 10 is normally made of steel. Other materials, such as high melting thermoplastics with good rigidity or thermo-setting compositions, may also be utilized to produce the drum extender of the present invention. Examples include polypropylenes, Nylon 6, Nylon 6,6, high density polyethylene, glass reinforced unsaturated polyesters or epoxy.

In utilizing the drum extender, care must be taken to avoid build up of curedor dried adhesive or sealant to prevent damage to the 'O' ring seal that such materials could cause. In this regard, the drum extender should be cleaned before each use. It is preferred that the whole of the inside surfaces of the drum extender, including flange 13 and lip means 11, be coated with a non-stick coating. Examples of materials which can be utilized for the non-stick coating include the tetrafluoroethylene fluorocarbon polymers of fluroinated ethylene-propylene resins sold under the trade mark Teflon. Other equivalent non-stick materials may also be employed. With a non-stick, coating, cleaning and removal of any cured or died residue will not be difficult to accomplish.

The drum extender may be fastened to the drum using cover clamping ring 19 in the same manner that a cover is fastened to the drum. Alternatively, a clamping mechanism such as shown in Figures 6 to 9 could be directly incorporated onto the drum extender.

Referring to Figure 6, drum extender 10 has U-shaped lip 11 which fits onto roll 22 of open head drum 20. Gasket 14 fits between lip 11 and roll 22 to prevent leakage. Clamping device 30 includes handle 31, link 32, adjustment nut 33 and gripper 34. Adjustment nut 33 includes right and left hand threads. Mount 15 may be welded onto flange portion 13 of a drum extender made of steel or may actually be a part of a drum extender moulded from a plastic or resinous material. Referring to Figure 7, handle 31 is connected to mount 15 by pin 35. Handle 31 is also connected to link 32 by pin 36. As the handle is moved toward the drum extender gripper 34 is pulled upward to clamp the extender to the roll 22 of the open head barrel.

Referring to Figure 8, in order to utilize a drum which does not have a roll 22 and gasket 14 to support the drum cover, it must first be opened with a drum de-header or opener (not shown) as is known in the art, which leaves a fold of material 23. Drum extender 10 has a modified lip 11, which fits over fold 23. Clamping device 30 is basically the same as depicted in Figures 6 and 7 with the exception that gripper 34 is adapted to engage fold 23 and that adjustment screw 37 is provided instead of adjustment nut 33. Adjustment screw 37 has right and left hand threads.

By utilizing the drum extender as described above, a drum of hot-melt material can be completely filled and utilized with melter dispenser apparatus having a heated platen. The drum extender will accommodate the 'O' ring seal of the heated platen of the melter dispenser and prevent molten material from spilling over the sides. In the case of certain moisture-curable adhesives, such as compositions based on prepolymers derived from aliphatic or aromatic isocyanates, such as diphenyl methane diisocyanate, and polyesters, polyethers or polycaprolactones derived from an aliphatic or aromatic dicarboxylic acid and an aliphatic or aromatic diol, it is preferred to fill the drum, insert a layer of release film, attach the cover and then turn upside-down while the adhesive is cooling. Turning upside-down effectively seals the drum to prevent moisture from entering the drum and the release film prevents the adhesive from bonding the cover to the drum, the release film may be any film to which the adhesive does not bond such as a high density polyethylene film or a laminate which includes high density polyethylene.

While the improved melting and dispensing apparatus of the present invention has been described for use with hot-melts, particularly moisture-curable hot-melt compositions, it will be appreciated that the apparatus could also be utilized for other viscous compositions such as epoxys or other types of sealants or adhesives.

## Claims

1. Apparatus for melting and dispensing a hot-melt material comprising :

a cylindrical container or drum (20) for holding hot-melt type material to be melted and dispensed in a molten liquid state, said container having one closed end and one open end,

means for supporting (55) said container in an upright position with said open end facing upward,

a cylindrical platen (51) having an 'O' ring seal (53) on its periphery and having an orifice (54) through which molten material is pumped, said platen being positioned to fit into the open end of said container and sized so that the 'O' ring seal slideably engages the inside wall of said container,

means for heating (61) said platen to melt said material, pumping means (58) for pumping molten material through said orifice, and

means for pressing (52, 56) said heated platen in a downward motion into said material and withdrawing said platen when the container has been emptied,

characterised in that a disengageable annular drum extender flange (10) is provided upon the open end of said container, said flange having an inside diameter about the same as that of said container and having a height sufficient to engage said 'O' ring seal of said heated platen, and lip means (11) to cooperate with the open end of said container, together with

clamping means (19, 30) for securing said annular flange to said container.

2. Apparatus according to Claim 1, wherein said supporting means (55) includes a flat base.

3. Apparatus according to Claim 1 or Claim 2 wherein said heating means (61) includes electrical resistance wires embedded in said platen.

4. Apparatus according to Claim 1, Claim 2 or Claim 3, wherein said pressing means (52, 56) includes pneumatic cylinders.

5. Apparatus according to any one of the preceding claim wherein said lip means (11) includes a U-shaped lip.

6. Apparatus according to any one of the preceding claims wherein said clamping means (19, 30) includes a retaining ring.

7. Apparatus according to any one of the preceding claim wherein said clamping means (19, 30) is attached to the flange and includes a handle (31) connected to a gripper (22) by an adjustable nut or screw (33) wherein said gripper is adapted to engage the open end of said drum.

8. Apparatus according to any one of the preceding claim, wherein said annular drum extender flange (10) is coated with a non-stick coating on the inside wall and on the inside of the lip means.

9. Apparatus according to Claim 8 wherein said non-stick coating comprises a tetrafluoroethylene fluorocarbon polymer or a fluorinated ethylene-propylene resin.

10. Apparatus according to any one of the preceding claims, wherein said cylindrical container (20) comprises an open head drum.

11. Apparatus according to any one of the preceding claims wherein said cylindrical container (20) contains a hot melt material to be dispensed.

12. Apparatus according to Claim 11, wherein said hot melt material comprises a prepolymer derived from an aromatic or aliphatic isocyanate and a polyester, polyether, or polycaprolactone derived from an aliphatic or aromatic dicarboxylic acid, and an aliphatic or aromatic diol.

13. Apparatus according to any one of Claims 1 to 10 wherein said container (20) contains a moisture-curable material to be dispensed.

14. Apparatus according to Claim 13 wherein said moisture-curable material comprises a prepolymer derived from diphenyl methane diisocyanate and a polyester derived from an aliphatic dicarboxylic acid and an aliphatic diol.

**Patentansprüche**

1. Vorrichtung zum Schmelzen und Abgeben eines hochschmelzenden Materials, mit :
— einem zylindrischen Behälter oder Trommel (20) zum Aufnehmen eines hoch-schmelzenden Materials, das zu schmelzen und in einem geschmolzenen, flüssigen Zustand abzugeben ist, wobei der Behälter ein geschlossenes Ende und ein offenes Ende aufweist,
— Mittel (55) zum Tragen des Behälters in einer aufrechten Position, wobei das offene Ende nach oben weist,
— eine zylindrische Platte (51) mit einer O-Ring-Dichtung (53) an seinem Umfang und mit einer Öffnung (54), durch die geschmolzenes Material gepumpt wird, wobei die Platte derart positioniert ist, daß diese in das offene Ende des Behälters eingepaßt ist und so groß ist, daß die O-Ring-Dichtung gleitend die Innenwandung des Behälters berührt,
— Mittel (61) zum Erhitzen der Platte zum Schmelzen des Materials,
— Mittel (58) zum Pumpen des geschmolzenen Materials durch die Öffnung, und

— Mittel (52, 56) zum Pressen der erwärmten Platte nach unten in das Material und zum Abziehen der Platte, wenn der Behälter geleert ist, dadurch gekennzeichnet, daß ein lösbarer ringförmiger Trommelverlängerungsflansch (10) an dem offenen Ende des Behälters vorgesehen ist, dessen Innendurchmesser etwa demjenigen des Behälters entspricht und eine Höhe aufweist, die ausreichend ist, um mit der O-Ring-Dichtung der Heizplatte zusammenzuwirken und eine Lippe (11), die mit dem offenen Ende des Behälters zusammenwirkt, gemeinsam mit
— Klemmitteln (19, 30) zum Befestigen des ringförmigen Flansches an dem Behälter.

2. Vorrichtung nach Anspruch 1, wobei die Mittel (55) zum Tragen des Behälters eine flache Basis aufweist.

3. Vorrichtung nach Anspruch 1 und Anspruch 2, dadurch gekennzeichnet, daß die Heizmittel (61) elektrische Widerstandsdrähte, die in die Platte eingebettet sind, aufweisen.

4. Vorrichtung nach Anspruch 1, Anspruch 2 und Anspruch 3, wobei die Mittel (52, 56) zum Pressen pneumatische Zylinder aufweisen.

5. Vorrichtung nach einem der vorangehenden Ansprüche, wobei die Lippe (11) U-förmig ausgebildet ist.

6. Vorrichtung nach einem der vorangehenden Ansprüche, wobei die Klemmittel (19, 30) einen Rückhaltering aufweisen.

7. Vorrichtung nach einem der vorangehenden Ansprüche, wobei das Klemmittel (19, 30) an den Flansch angebracht ist und einen Handgriff (31) aufweist, der mit einem Greifer (22) über eine einstellbare Mutter oder Schraube (33) verbunden ist, wobei der Greifer zum Zusammenwirken mit dem offenen Ende der Trommel eingerichtet ist.

8. Vorrichtung nach einem der vorangehenden Ansprüche, wobei der ringförmige Trommelverlängerungsflansch (10) mit einer gleitfreudigen Beschichtung an der Innenwandung und der Innenseite der Lippe beschichtet ist.

9. Vorrichtung nach Anspruch 8, wobei die gleitfreudige Beschichtung ein Tetrafluorethylen-Fluorkohlenstoff-Polymer oder ein fluoriniertes Ethylenpropylenharz ist.

10. Vorrichtung nach einem der vorangehenden Ansprüche, wobei der zylindrische Behälter (10) eine Trommel mit einem offenen Kopf aufweist.

11. Vorrichtung nach einem der vorangehenden Ansprüche, wobei der zylindrische Behälter (20) ein abzugebendes hoch-schmelzendes Material beinhaltet.

12. Vorrichtung nach Anspruch 11, wobei das hochschmelzende Material ein Prepolymer, das von einem aromatischen oder aliphatischen Isozyanat abgeleitet ist und ein Polyester, Polyether oder Polycaprolacton, daß von einer aliphatischen oder aromatischen Dikarbonoxylsäure abgeleitet ist und ein aliphatisches oder aromatisches Diol aufweist.

13. Vorrichtung nach einem der Ansprüche 1 bis 10, wobei der Behälter (20) ein abzugebendes Feuchtigkeits-Dichtungsmaterial beinhaltet.

14. Vorrichtung nach Anspruch 13, wobei das feuchtigkeitsabdichtende Material ein von Diphenylmethandiisozyanat abgeleitetes Prepolymer und ein von einer aliphatischen Dikarbonoxylsäure und einem aliphatischen Diol abgeleitetes Polyester aufweist.

## Revendications

1. Dispositif pour faire fondre et pour distribuer un matériau thermofusible, comportant :

un récipient ou tambour cylindrique (20) pour contenir le matériau dudit thermofusible à faire fondre et à distribuer dans un état liquide fondu, ledit récipient ayant une extrémité fermée et une extrémité ouverte,

des moyens (55) pour supporter ledit récipient dans une position élevée avec ladite extrémité ouverte regardant vers le haut,

un plateau cylindrique (51) ayant un joint torique (53) sur sa périphérie et ayant un orifice (54) à travers lequel on pompe le matériau fondu, ledit plateau étant positionné de façon à s'adapter dans l'extrémité ouverte dudit récipient et étant dimensionné de telle sorte que le joint torique vienne en contact par glissement avec la paroi intérieure dudit récipient,

des moyens (61) pour chauffer ledit plateau afin de faire fondre ledit matériau,

des moyens de pompage (58) pour pomper le matériau fondu à travers ledit orifice, et

des moyens (52, 56) pour appuyer ledit plateau chauffé dans un déplacement vers le bas à l'intérieur dudit matériau et pour retirer ledit plateau lorsque le récipient a été vidé,

**caractérisé** en ce qu'un flasque (10) d'extension de tambour annulaire pouvant être dégagé est disposé au-dessus de l'extrémité ouverte dudit récipient, ledit flasque ayant un diamètre intérieur qui est à peu près le même que celui dudit récipient et ayant une hauteur suffisante pour venir en contact avec ledit joint torique dudit plateau chauffé, et des moyens (11) formant lèvres pour coopérer avec l'extrémité ouverte dudit récipient, ainsi que

des moyens de verrouillage (19, 30) pour fixer ledit flasque annulaire audit récipient.

2. Dispositif selon la revendication 1, dans lequel lesdits moyens de support (55) comportent une base plate.

3. Dispositif selon la revendication 1 ou la revendication 2, dans lequel lesdits moyens de chauffage (61) comportent des fils de résistances électriques noyés dans ledit plateau.

4. Dispositif selon la revendication 1 ou la revendication 2 ou la revendication 3, dans lequel lesdits moyens de passage (52, 56) comportent des cylindres pneumatiques.

5. Dispositif selon l'une quelconque des revendications précédentes, dans lequel lesdits moyens (11) formant lèvre, comportent une lèvre en forme de U.

6. Dispositif selon l'une quelconque des revendications précédentes, dans lequel lesdits moyens de verrouillage (19, 30) comportent un anneau de maintien.

7. Dispositif selon l'une quelconque des revendications précédentes, dans lequel lesdits moyens de verrouillage (19, 30) sont fixés au flasque et comportent une poignée (31) connectée à un dispositif d'agrippement (22) par un écrou ou une vis ajustable (33), ledit dispositif d'agrippement étant adapté pour s'engrener avec l'extrémité ouverte dudit tambour.

8. Dispositif selon l'une quelconque des revendications précédentes, dans lequel ledit flasque (10) d'extension de tambour annulaire est revêtu par un revêtement non collant sur la paroi intérieure et à l'intérieur des moyens formant lèvre.

9. Dispositif selon la revendication 8, dans lequel ledit revêtement non collant comporte un polymère fluorocarboné à base de tétrafluoroéthylène ou une résine éthylène-propylène fluorée.

10. Dispositif selon l'une quelconque des revendications précédentes, dans lequel ledit récipient cylindrique (20) comporte un tambour à tête ouverte.

11. Dispositif selon l'une quelconque des revendications précédentes, dans lequel ledit récipient cylindrique (20) contient un matériau thermofusible à distribuer.

12. Dispositif selon la revendication 11, dans lequel ledit matériau thermofusible comporte un prépolymère dérivé d'un isocyanate aromatique ou aliphatique et un polyester, un polyéther ou un polycaprolactone dérivés d'un acide dicarboxylique aliphatique ou aromatique, et un diol aliphatique ou aromatique.

13. Dispositif selon l'une quelconque des revendications 1 à 10, dans lequel ledit récipient (20) comporte un matériau durcissable à l'humidité qui doit être distribué.

14. Dispositif selon la revendication 13, dans lequel ledit matériau durcissable à l'humidité comporte un prépolymère dérivé du diphénylméthanediisocyanate et un polyester dérivé d'un acide dicarboxylique aliphatique et d'un diol aliphatique.

**FIG. 1**

**FIG. 2**

**FIG. 3**

**FIG. 4**

**FIG. 5**

FIG. 6

FIG. 7

# FIG. 8

# FIG. 9

EP 0 330 390 B1